# EUROPÄISCHE PATENTSCHRIFT

(11) **EP 2 023 674 B1**
(45) Veröffentlichungstag und Bekanntmachung des Hinweises auf die Patenterteilung: **28.03.2012**
(21) Anmeldenummer: 07113889.5
(22) Anmeldetag: 06.08.2007
(51) Int. Cl.: H04W 4/00

(54) **Verfahren für die Mobilitätsverwaltung von Endgeräten in Mobilfunknetzen, Mobilfunknetz und Mobilendgerät**
Method for mobility administration of terminals in mobile networks, mobile network and mobile terminal
Procédé de traitement de la mobilité de terminaux dans des réseaux hertziens mobiles, réseau hertzien mobile et terminal mobile

(43) Veröffentlichungstag der Anmeldung: 11.02.2009
(73) Patentinhaber: Schweizerische Bundesbahnen SBB, 3000 Bern 65 (CH)
(72) Erfinder: Baiker, Stefan, CH-4059, Basel (CH)
(74) Vertreter: Rutz & Partner

(56) Entgegenhaltungen:
- EP-A- 0 566 548
- EP-A- 1 058 473
- EP-A- 1 657 942
- WO-A-2004/040933
- DE-A1- 19 903 909
- US-A1- 2006 068 802
- UHLIRZ M ED - INSTITUTE OF ELECTRICAL AND ELECTRONICS ENGINEERS: "CONCEPT OF A GSM-BASED COMMUNICATION SYSTEM FOR HIGH-SPEED TRAINS" PROCEEDINGS OF THE VEHICULAR TECHNOLOGY CONFERENCE. STOCKHOLM, JUNE 8, Bd. VOL. 2 CONF. 44, 8. Juni 1994 (1994-06-08), Seiten 1130-1134, XP000497595 ISBN: 0-7803-1928-1

## Beschreibung

Die Erfindung betrifft ein Verfahren für die Mobilitätsverwaltung von Mobilendgeräten in Mobilfunknetzen sowie nach diesem Verfahren arbeitende Mobilfunknetze und Mobilendgeräte.

Die vorliegende Erfindung betrifft insbesondere ein nach den GSM- oder UMTS-Spezifikationen arbeitendes zellulares Mobilfunknetz.

Gemäss [1], Michel Mouly, Marie-Bernadette Pautet, The GSM System for Mobile Communications, Cell & Sys Verlag, 1992, Seiten 44-47 resultieren aus der Mobilität der Teilnehmer in einem Mobilfunknetz, insbesondere hinsichtlich der Entgegennahme von Anrufen, wesentliche Differenzen im Vergleich zu Festnetzen, in denen ein Endgerät stets mit demselben Festnetzanschluss verbunden bleibt. In einem zellularen Mobilfunknetz muss das gerufene Mobilendgerät zuerst lokalisiert werden, bevor eine Verbindung zu einem rufenden Teilnehmer aufgebaut werden kann. Falls der gerufene Teilnehmer seinen Standort seit der letzten Lokalisierung geändert hat, muss das System daher zuerst feststellen, in welcher Zelle sich das Mobilendgerät befindet.

Zudem ist grundsätzlich zwischen zwei Zuständen des Mobilendgerätes zu unterscheiden. Einerseits kann sich das eingeschaltete Mobilendgerät im Ruhezustand (Idle-Mode) befinden, in welchem es die vom Mobilfunknetz ausgesendeten Broadcast-Kanäle (Steuerkanäle) abhört, und selbst über keinen Sprachkanal verfügt. Andererseits kann sich das Mobilendgerät im Aktivzustand (Dedicated-Mode) befinden, in welchem es über einen Duplex-Kanal mit einem weiteren Teilnehmer verbunden ist (siehe beispielsweise [1], Seite 317, Kapitel 6.1.2). In Abhängigkeit des vorliegenden Zustands (Idle-Mode oder Dedicated-Mode) unterscheiden sich die Prozeduren des Mobilitäts-Management, beim Auftreten von Standortänderungen des Teilnehmers.

Ein Aufenthaltsbereich (Location Area) umfasst eine Gruppe von Zellen, so dass bei einem Zellwechsel zwei verschiedene Situationen auftreten können. Einerseits kann ein Zellwechsel innerhalb desselben Aufenthaltsbereichs auftreten. Andererseits kann mit dem Zellwechsel gleichzeitig ein Wechsel des Aufenthaltsbereichs erfolgen. Im ersten Fall (Zellwechsel innerhalb des Aufenthaltsbereichs) sendet das Mobilendgerät keine Information an das Netzwerk. Im zweiten Fall (Zellwechsel mit gleichzeitigem Wechsel des Aufenthaltsbereichs) wird das Netzwerk entsprechend informiert. Weiterhin ist ein Wechsel zwischen verschiedenen Mobilfunknetzen, wie Mobilfunknetzen unterschiedlicher Betreiber und/oder unterschiedlicher Technologien (GSM, UMTS, ...) möglich.

Gemäss [2], Bernhard Walke, Mobilfunknetze und ihre Protokolle, Band 1, B.G. Teubner Verlag, Stuttgart 2000, Seite 259 sind beim Verlassen des Aufenthaltsbereichs die sofortigen Aktualisierungen der Heimdatei (HLR Home Location Register) und der Besucherdatei (VLR Visitor Location Register) durchzuführen. Beim Wechsel des Aufenthaltsbereichs sind zwei Fälle zu unterscheiden. Es kann ein Wechsel innerhalb des gleichen VLR-Bereichs oder ein Wechsel zwischen zwei VLR-Bereichen vorliegen. Ändert sich mit dem Aufenthaltsbereich gleichzeitig der VLR-Bereich, so liegt in der zukünftigen Besucherdatei noch kein Eintrag des Mobilendgerätes vor. Die Daten des Mobilendgerätes müssen daher aus der Heimdatei zur zukünftigen Besucherdatei übertragen und in der bisherigen Besucherdatei gelöscht werden. Fordert eine Mobilendgerät eine Bereichsaktualisierung, so liegen damit in der Regel auch die 4 Zeichen lange temporäre Mobilteilnehmeridentität (TMSI) sowie die Kennungen des alten Aufenthaltsbereichs (LAI) vor.

Damit ist es möglich, die bisherige Besucherdatei und somit auch die internationale Mobilteilnehmeridentität (IMSI) zu bestimmen. Nachdem der Teilnehmer authentifiziert wurde, teilt die neue Besucherdatei der Heimdatei den Bereichswechsel mit. Daraufhin überträgt die Heimdatei die notwendigen Teilnehmerdaten an die neue Besucherdatei. Es ist zu beachten, dass die oben beschriebenen Prozeduren insbesondere auch dann ausgeführt werden, wenn das Mobilendgerät eingeschaltet ist, sich aber in Ruhezustand befindet (Idle-Mode).

Gemäss [2], Seiten 215 ff. gestatten GSM-Mobilfunknetze, eine bestehende Verbindung bei einem Funkzonenwechsel automatisch nachzuführen. Dieses automatische Nachführen während einer bestehenden Verbindung wird als Handover bezeichnet. Ein Handover findet immer dann statt, wenn ein Mobilendgerät den Bereich einer Feststation, gegebenenfalls auch gleichzeitig den Bereich einer Mobilen Vermittlungszentrale MSC verlässt. Ein Handover kann verschiedene Ursachen haben. Jedes Mobilendgerät versucht den Funkkanal zu benutzen, der die beste Verbindungsqualität, d.h., den besten Störsignalabstand bietet. Die Qualität der Verbindung kann dabei durch viele verschiedene Faktoren, wie ungenügender Signalpegel oder Interferenzen, beeinflusst werden. Eine bestehende Verbindung eines Mobilendgerätes zur Feststation kann, trotz guter Qualität, die Ursache für Interferenzstörungen bei anderen Mobilendgeräten sein. Wechselt das gestörte Mobilendgerät auf einen anderen Funkkanal, können die Störungen minimiert werden. Beispielsweise lässt sich die Dienstgüte des Netzes optimieren, wenn die Teilnehmer gleichmässig auf die verfügbaren Zellen verteilt werden.

Die Vorbereitung eines Handovers beruht auf der ständigen messtechnischen Beobachtung und Bewertung der Empfangssituation durch die betreffenden Feststationen und das Mobilendgerät. Verlässt ein mobiler Teilnehmer den Versorgungsbereich einer Feststation, muss er von einer benachbarten Feststation versorgt werden, damit die Verbindung nicht abreisst. Ein Verbindungsabbruch während des Gesprächs wird von den Teilnehmern nicht oder nur sehr ungern akzeptiert und hat deshalb grosses Gewicht bei der Festlegung der Dienstgüte. Handover können auch durch das Mobilfunknetz veranlasst werden, falls das Verkehrsaufkommen einer Stelle zeitweise zu hoch liegt und Nachbarzellen weniger ausgelastet sind. Gemäss [2], Seite 236 basieren Handover-Prozesse in GSM-Mobilfunknetzen auf den ermittelten Funkmessdaten, worin auch die Hauptproblematik liegt, denn die Funkausbreitung in der tatsächlichen Umgebung ist im Regelfall nicht einfach berechenbar und stark unregelmässig. Insbesondere Abschattungen durch Hindernisse können unerwünschte Effekte haben. Dies äussert sich meist dadurch, dass zu viele Handover durchgeführt werden. Ein äusserst unerwünschter Effekt, der relativ häufig auftritt, ist das so genannte Pingpong-Handover. Darunter ist ein Handover zu einer Nachbarzelle zu verstehen, dem nach kurzer Zeit (z.B. < 10s) ein Handover zurück zur ursprünglichen Zelle folgt.

Die Zahl der pro Verbindung durchgeführten Handover sollte in einem GSM-Mobilfunknetz möglichst gering sein, weil der Aufwand für die Signalisierung sowohl innerhalb des stationären Teils des Mobilfunknetzes, als auch von und zu den Mobilendgeräten gross ist. Für die Signalisierung des Handovers zwischen Mobilendgeräten und Feststationen muss der Betriebskanal zeitweise für die Signalisierung benutzt werden, was zu Datenverlust und entsprechenden Einbussen der Sprachqualität führt. Gemäss [2] ist es daher zwingend notwendig, unnötige Handover zu vermeiden.

Gemäss [3], Guangbin Fan, Ivan Stojmenovic, und Jingyuan Zhang, A Triple Layer Location Management Strategy for Wireless Cellular Networks, Computer Science Department, The University of Alabama, tritt der Pingpong-Effekt nicht nur bei Handover-Prozessen mit bestehenden Verbindungen, sondern generell, und somit auch bei Fehlen einer Verbindung (Mobilfunkendgerät im Idle-Mode), zumindest dann auf, wenn sich der Teilnehmer im Bereich zwischen zwei Aufenthaltsbereichen bewegt. In [3] ist ferner ausgeführt, dass durch Pingpong-Effekte beträchtliche Kosten verursacht werden.

In [2], Seiten 236-237 sind Massnahmen geschrieben, mittels derer sich der Pingpong-Effekt reduzieren lässt (Heraufsetzen des Hysterese-Werts, Änderungen der Mittelungslänge). Diese Massnahmen werden jedoch als ungeeignet bezeichnet, da Handover-Prozesse träge werden können und dadurch wirklich notwendige Handover gegebenenfalls nicht mehr rechtzeitig durchgeführt werden, so dass ein Verbindungsabbruch resultiert.

Handover-Prozesse und Location Update Prozeduren sind ferner in [4], WO 98/52375 A1 beschrieben. In [4] ist ferner beschrieben, dass Handover-Prozesse durch die Belastungen in denen einzelnen Zellen des Mobilfunknetzes stark beeinträchtigt werden. Vorzugsweise soll in allen Zellen dieselbe Belastung vorliegen oder in jeder Zelle zumindest genügend Kapazität für die Übernahme neuer Verbindungen vorhanden sein. Gemäss [4] werden daher die Belastungen der Zellen gemessen und die Handover-Prozesse entsprechend gesteuert, so das ein Lastausgleich erzielt wird.

In [5], WO 00/74417 A1 ist beschrieben, dass Handover, die für Mobilendgeräte durchgeführt werden, die innerhalb einer Zelle stationär sind, als Verkehrs-Handover bezeichnet werden. Diese Verkehrs-Handover dienen dazu, die betreffenden Zellen zu entlasten. Sofern ein Handover für eine grössere Anzahl von Mobilendgeräten durchgeführt werden muss, resultiert ein hoher Signalisierungsaufwand. Zur einfacheren Durchführung des Verkehrs-Handovers werden die Mobilendgeräte einer Zelle gruppiert, indem die Charakteristika der überwachten Verbindungen, beispielsweise die Signalstärke, die Signalqualität, die Fehlerrate oder die Round Trip Time gemessen werden. Ferner werden die Zellen-Parameter gemessen, insbesondere die Zellbelastung, die freie Kapazität oder der Interferenz-Level. Sofern die Zellbelastung einen bestimmten Schwellwert überschreitet, so kann eine Gruppe in eine andere Zelle überführt werden. Verkehrs-Handover unterscheiden sich daher deutlich von Handover-Prozessen, die bei geographischen Verschiebungen der Mobilendgeräte durchgeführt werden.

Ein Verfahren, das einer Vielzahl von innerhalb einer Transporteinheit angeordneten Mobilendgeräten Kommunikationsdienste zur Verfügung stellt, ist aus [6], US 5'867'785 bekannt. Während diese Mobilendgeräte simultan kommunizieren und befördert werden, soll ein Handover in Gruppen realisiert und der Signalisierungsaufwand dadurch entsprechend reduziert werden. Dazu ist innerhalb der Transporteinheit eine mobile Steuereinheit vorgesehen, der von einer stationären Steuereinheit des Mobilfunknetzes Kommunikationsressourcen zugeteilt werden, die zur Durchführung der Handover-Prozesse verwendet werden können.

Ein weiteres Verfahren, das einer Vielzahl von innerhalb einer Transporteinheit angeordneten Mobilendgeräten Kommunikationsdienste zur Verfügung stellt, ist aus [7], US 2004/0058678 A1 bekannt. Auch gemäss diesem Verfahren wird eine mobile Steuereinheit vorgesehen, welche Verbindungen, die zwischen den Mobilendgeräten und einer ersten Feststation des Mobilfunknetzes aufgebaut wurden, erfasst und für diese Verbindungen frühzeitig eine Mitteilung an eine zweite Feststation sendet, welche die genannten Verbindungen nach Durchführung der Handover-Prozesse übernehmen soll. Anhand der frühzeitigen Ankündigung der Verbindungen, die mittels Handover-Prozessen übernommen werden sollen, kann die zweite Feststation rechtzeitig die dafür notwendigen Ressourcen zur Verfügung stellen.

Nachteilig bei den in [6] und [7] beschriebenen Verfahren ist, dass innerhalb der Transporteinheiten eine mobile Steuereinheit erforderlich ist. Ferner sind Verfahren zur Verfügung zu stellen, welche eine zuverlässige Kommunikation zwischen den Feststationen des Mobilfunknetzes und der proprietären, mobilen Steuereinheit sicherstellen.

Der vorliegenden Erfindung liegt daher die Aufgabe zugrunde, die bestehenden Verfahren zur Mobilitätsverwaltung von Mobilendgeräten in einem Mobilfunknetz zu verbessern.

Insbesondere ist ein verbessertes Verfahren anzugeben, das einer Vielzahl von entlang einem Verkehrsweg transportierten, insbesondere innerhalb eines Verkehrsmittels angeordneten Mobilendgeräten, Mobilitätsdienste zur Verfügung stellt, anhand derer die Verbindungsqualität, insbesondere durch Vermeidung des Ping-Pong-Effekts sowie Verbindungsabbrüchen, deutlich verbessert und der Signalisierungsaufwand signifikant reduziert wird.

Ferner soll die Verwendung einer zusätzlichen, proprietären Steuereinheit vermieden werden.

Weiterhin sollen ein Mobilfunknetz und ein Mobilendgerät angegeben werden, die nach diesem Verfahren arbeiten.

Diese Aufgabe wird mit einem Verfahren und einem Mobilfunknetz sowie einem Mobilendgerät gelöst, welche die in Anspruch 1, 14 bzw. 21 angegebenen Merkmale aufweisen. Vorteilhafte Ausgestaltungen der Erfindung sind in weiteren Ansprüchen angegeben.

Das Verfahren, das der Mobilitätsverwaltung von Mobilendgeräten in einem Mobilfunknetz dient, umfasst mehrere Schritte, gemäss denen
a) durch wenigstens eine Feststation des Mobilfunknetzes PLMN den Mobilendgeräten zugehörige, mobilitätsrelevante Mobilendgeräte-Daten erfasst werden,
b) die Mobilendgeräte anhand der mobilitätsrelevanten Mobilendgeräte-Daten einem Verkehrsweg und/oder einem Verkehrsmittel, wie Autos, Autobus, Eisenbahn, zugeordnet werden und
c) die zueinander korrespondierenden, einem Verkehrsweg und/oder einem Verkehrsmittel zugehörigen Mobilendgeräte wenigstens einer Gruppe zugeordnet und entsprechende Gruppierungsdaten gebildet werden.

Dabei wird der Signalisierungsaufwand auf ein Minimum reduziert, indem Fiandover-Prozesse für die Mobilendgeräte durch Verwendung einer dynamischen Feststation vollständig vermieden werden. Erfindungsgemäss wird die dynamische Feststation parallel zu den gruppierten Mobilendgeräten entlang dem Verkehrsweg geführt. Anstatt für eine Vielzahl von Mobilendgeräten zahlreiche (intra MSC und extra MSC) Handover-Prozesse durchzuführen, wird lediglich die dynamische Feststation entlang dem Verkehrsweg weitergeführt, was nur noch innerhalb des Festnetzes einen minimalen Signalisierungsaufwand verursacht und die Luftschnittstelle vollständig entlastet.

In einer alternativen Ausgestaltung der Erfindung wird der Signalisierungsaufwand reduziert, indem die von der Feststation ermittelten Gruppierungsdaten einer dynamischen Steuereinheit zugestellt werden, der ein dynamischer Aufenthaltsbereich zugeordnet ist, welcher zumindest annähernd auf gleicher Höhe mit den gruppierten Mobilendgeräten geführt wird, so dass Änderungen des Aufenthaltsbereichs während einer Verschiebung entlang dem Verkehrsweg entfallen. Bereits durch die Vermeidung der Aktualisierungen der Aufenthaltsbereiche für die auf den Verkehrswegen transportierten Mobilendgeräte, die sich im Idle-Mode befinden, entfällt ein erheblicher Signalisierungsaufwand.

Die erfindungsgemäss gebildeten Gruppierungsdaten können in vielerlei Hinsicht vorteilhaft verwendet werden. Aktuell gebildete Gruppierungsdaten können unmittelbar für die Mobilitätsverwaltung der betreffenden Mobilendgeräte verwendet werden. Es kann sichergestellt werden, dass genügend Ressourcen in Zellen bereitgehalten werden, in denen sich die Anzahl der Mobilendgeräte sprunghaft steigern wird. Dadurch wird der wesentlichste Qualitätsfaktor, nämlich die Vermeidung von Verbindungsunterbrüchen, deutlich verbessert. Durch die Vermeidung von Verbindungsunterbrüchen, die bei Überlastung einer Zelle und demzufolge nicht realisierbaren Handover-Prozessen auftreten könnten, resultiert zudem eine Reduktion des Signalisierungsaufwandes, da der störende Abbau und Wiederaufbau von Verbindungen entfällt.

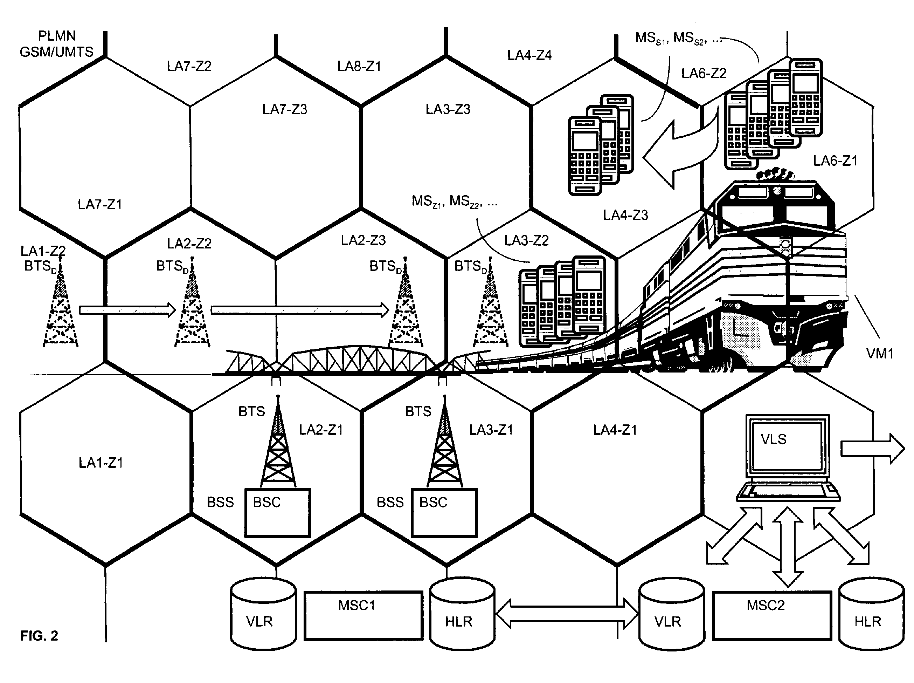

Ferner können die gebildeten Gruppierungsdaten ausgewertet werden, um den Verkehrszustand auf dem Verkehrsweg zu ermitteln. Sofern beispielsweise festgestellt wird, dass eine oder mehrere Gruppen von Mobilendgeräten sich nur langsam oder gar nicht mehr fortbewegen, kann eine bestehende oder sich bildende Stausituation erkannt werden. Die ermittelten mobilitätsrelevanten Daten können beispielsweise gemäss dem aus [8], EP 1 056 063 A1 bekannten Verfahren unter Anwendung eines Kalman-Filters oder anderer Analysemethoden ausgewertet werden. Die für das Verfahren gemäss [8] erforderlichen Messvorrichtungen entfallen vollständig bzw. werden durch das Mobilfunknetz ersetzt. Anhand des erfindungsgemässen Verfahrens können daher alle stark belasteten Verkehrswege insbesondere des privaten Verkehrs überwacht und gegebenenfalls gesteuert werden. Die Informationen können mit Verkehrsleitwegsystemen gekoppelt werden, welche den Verkehr vorzugsweise derart steuern, dass die im voraus berechneten Stausituationen vermieden werden. Dazu kann im Mobilfunknetz PLMN ein Verkehrsrechner (siehe Figur 2, Verkehrsrechner VLS) vorgesehen werden, dem alle mobilitätsrelevanten Daten zugeführt werden. Der Verkehrsrechner kann in der Folge ein Bild der momentanen Verkehrssituation und vorzugsweise auch von zukünftigen Verkehrssituationen im Bereich des Mobilfunknetzes PLMN erstellen und Daten sowie Informationen an Verkehrsleitsysteme oder auch an Rundfunksender übertragen. Die Verkehrsleitsysteme können in der Folge, beispielsweise durch entsprechende Verkehrssignalisierung, einen gegebenenfalls notwendigen Lastausgleich einleiten.

Anhand der ermittelten Daten werden vorzugsweise auch zukünftig erforderliche insbesondere verkehrstechnische Ressourcen, wie Transportmittel oder Verpflegung, berechnet und bereitgestellt. Beispielsweise kann in einem Autobahnrestaurant der Bedarf an Verpflegung abgeschätzt und bereitgestellt werden. Ferner können entsprechende Verkehrmittel bereitgestellt werden durch die der Anschluss und Weitertransport der Verkehrsteilnehmer gesichert wird.

Da normalerweise nicht jedes Automobil ein Mobilendgerät mitführt, kann das anhand des Mobilfunknetzes PLMN ermittelte Verkehrsaufkommen anhand eines Korrekturfaktors gewichtet werden. Korrekturfaktoren können in einfacher Weise anhand von Verkehrsmessungen ermittelt werden.

Das erfindungsgemässe Verfahren zur Ermittlung des Verkehrszustandes innerhalb wenigstens eines Verkehrsabschnittes erfolgt daher vorzugsweise mit einem auf einem Modell basierenden Kalman-Filter, durch das die Länge des Verkehrsabschnittes sowie die am Ein- und Ausgang des Verkehrsabschnittes gemessenen Verkehrsstärken berücksichtigt werden. Die Länge des Verkehrsabschnittes entspricht vorzugsweise dem Durchmesser einer oder mehreren Zellen oder dem Durchmesser eines Aufenthaltsbereichs, der von den Verkehrswegen durchquert wird. Die am Ein- und Ausgang des Verkehrsabschnittes gemessenen Verkehrsstärken können anhand der entsprechenden Signalisierungsmeldungen erfasst werden, die im Mobilfunknetz PLMN beim Auftreten von Handover-Prozessen oder Aktualisierungen des Aufenthaltsbereichs registriert werden.

Anhand des erfindungsgemässen Verfahrens in Kombination mit dem in [8] offenbarten Verfahren kann der Verkehrszustand auf einem Verkehrsweg ermittelt, und insbesondere an Verkehrsknotenpunkten präzise vorausberechnet werden. Sofern sich beispielsweise mehrere Gruppen von Automobilen auf verschiedenen Verkehrswegen einem Verkehrsknotenpunkt annähern, so lässt sich die entsprechende Belastung dieses Verkehrsknotenpunkts zu einem bestimmten Zeitpunkt präzise errechnen.

Die Übernahme der Mobilendgeräte durch die dynamische Steuereinheit sowie die Kennung des zugehörigen dynamischen Aufenthaltsbereichs wird den Mobilendgeräten über einen Steuerkanal, wie den Broadcast Control Channel BCCH oder einen Dedicated Control Channel DCCH, SDCCH, SACCH mitgeteilt und vorzugsweise durch die entlang dem Verkehrsweg angeordneten Feststationen jeweils bestätigt. Eine Aktualisierung Aufenthaltsbereichs ist daher erst dann notwendig, wenn die über einen Steuerkanal erhaltene Kennung des Aufenthaltsbereichs nicht mehr der ursprünglichen Kennung des dynamischen Aufenthaltsbereichs entspricht. Die Steuerkanäle des GSM-Systems, die in [2], Seiten 161-163 beschrieben sind und in Anlehnung an das ISDN auch als D-Kanäle bezeichnet werden, transportieren Steuerinformationen, die der Signalisierung und Steuerung des Systems dient und nicht bis zu den Teilnehmern weitergereicht wird. Über den BCCH-Kanal wird Information über das Mobilfunknetz PLMN auf einer Punktzu-Mehrpunkt-Verbindung von der Feststation an die Mobilstation in der Funkzelle übertragen. Beispielsweise wird die Verfügbarkeit bestimmter Optionen an die Mobilstation übertragen. Mit dem BCCH-Kanal kann daher die Kennung des dynamischen Aufenthaltsbereichs an die Mobilendgeräte übertragen werden. Grundsätzlich können alle Möglichkeiten der Steuerkanäle ausgeschöpft oder Erweiterungen geschaffen werden.

Zur optimalen Verwendung der mobilitätsrelevanten Mobilendgeräte-Daten werden vorzugsweise auch die Position und die Bewegungsrichtung der Mobilendgeräte und/oder der Gruppe von Mobilendgeräten bestimmt. Vorzugsweise wird für alle Mobilendgeräte ein geographischer Mittelwert gebildet, anhand dessen die dynamische Feststation und/oder die dynamische Steuereinheit beziehungsweise der dynamische Aufenthaltsbereich weitergeführt wird.

Die mobilitätsrelevanten Mobilendgeräte-Daten werden vorzugsweise aus Meldungen und Daten gewonnen, die von den Mobilendgeräten für Handover- und Location Update-Prozesse abgegeben werden oder die aus Statusänderungen der Mobilendgeräte resultieren.

In einer weiteren vorzugsweisen Ausgestaltung der Erfindung werden die mobilitätsrelevanten Mobilendgeräte-Daten unter Berücksichtigung des früher registrierten Mobilitätsverhaltens der Mobilendgeräte ausgewertet. Da zahlreiche Verkehrsteilnehmer und somit auch Teilnehmer des Mobilfunknetzes oft dieselben Verkehrsmittel verwenden und täglich dieselben Verkehrswege benutzen, können aus entsprechend registrierten Daten wertvolle Erkenntnisse gezogen werden, anhand derer sich die Mobilitätsverwaltung der Mobilendgeräte signifikant verbessern lässt. Die Erfassung entsprechender Teilnehmerdaten erfolgt bevorzugt mit dem Einverständnis des Teilnehmers, welches die in den meisten Fällen gegeben wird, da die Teilnehmer mit einer signifikanten Verbesserung der Verbindungsqualität rechnen dürfen. Der Betreiber des Mobilfunknetzes kann dieses Leistungsmerkmal daher als Dienstleistung anbieten.

Ferner können die mobilitätsrelevanten Mobilendgeräte-Daten auch Auszüge aus Datenbanken, beispielsweise Daten aus einer Agenda, die im Mobilendgerät oder im Mobilfunknetz PLMN geführt wird. Beispielsweise kann in einem Mobilendgerät die Reiseroute und die Reisezeit abgelegt sein und für den Zugriff durch das Mobilfunknetz PLMN bereitgehalten werden.

Die mobilitätsrelevanten Mobilendgeräte-Daten können aus proprietären oder normierten Meldungen und/oder Messungen, wie "RR-Channel-Request" Meldungen (RACH) oder Location Update-Request- Meldungen oder aus Messungen für Handover-Prozesse, insbesondere der Registrierung des Verlaufs der Messwerte, ermittelt werden. Erfasst werden vorzugsweise
a) der Empfangspegel der versorgenden und der benachbarten Zellen, gegebenenfalls der Empfangspegel einer benachbarten Zelle eines anderen Mobilfunknetzes (anderer Betreiber und/oder andere Mobilfunktechnologie); und/oder
b) die Signalqualität, insbesondere die Bitfehlerhäufigkeiten der Verbindungen zur versorgenden und zu benachbarten Zellen; und/oder
c) die Schleifenlaufzeit, insbesondere die geschätzte Entfernung des Mobilendgerätes zur versorgenden Feststation und/oder benachbarten Bodenstationen; und/oder
d) die Doppler-Verschiebung; und/oder
e) die empfangene Interferenzleistung.

Anhand der genannten Messungen können daher alle kinematischen Grössen der Mobilendgeräte, deren Zugehörigkeit zu Verkehrswegen und/oder Verkehrsmitteln ermittelt werden. Besonders präzise gelingt die Zuordnung der Mobilendgeräte zu Verkehrswegen und/oder Verkehrsmitteln, indem Referenzdaten verwendet werden, die anhand von Test-Mobilendgeräten gewonnen werden.

Diese Referenzdaten beziehungsweise mobilitätsrelevanten Mobilendgeräte-Referenzdaten werden für Test-Mobilendgeräte ermittelt, währenddem diese entlang den relevanten Verkehrswegen, insbesondere den Transversalen innerhalb einer oder mehrerer Zellen geführt werden. In einer vorzugsweisen Ausgestaltung der Erfindung werden anhand von Mobilendgeräte-Daten Modelle für die Test-Mobilendgeräte erstellt. Die aktuell erfassten mobilitätsrelevanten Mobilendgeräte-Daten der zu gruppierenden Mobilendgeräte werden in der Folge mit den Mobilendgeräte-Daten der Test-Mobilendgeräte oder, gegebenenfalls mittels eines neuronalen Netzwerks, mit den für die Test-Mobilendgeräte erstellten Modellen verglichen und zu gruppierende Mobilendgeräte einem Verkehrsweg und/oder Verkehrsmittel zugeordnet. Die Verwendung neuronaler Netzwerke ist beispielsweise aus [7], US 5'960'391 bekannt.

In einer weiteren, besonders bevorzugten Ausgestaltung der Erfindung werden die zu gruppierenden Mobilendgeräten einem zumindest teilweise identifizierten Verkehrsmittel, gegebenenfalls einem Bus oder einer Eisenbahn zugeordnet. Beispielsweise wird erkannt, dass die gruppierten Mobilendgeräte einer Eisenbahn zugehörig sind, die sich auf einen bestimmten Verkehrsweg befindet. Anhand der Fahrpläne, gegebenenfalls aktuell ermittelter Fahrtdaten kann das Verkehrsmittel vollständig identifiziert werden. Beispielsweise wird die Zugnummer der Eisenbahn identifiziert, anhand der weitere vorteilhafte Verfahrensschritte durchgeführt werden können. Insbesondere können in Verbindung mit dem betreffenden Verkehrsmittel stehende Informationen an die Teilnehmer gesandt werden, welche beispielsweise hinsichtlich der Reisepläne von Interesse sind. Beispielsweise können Verspätungen gemeldet oder Verkehrsanschlüsse bestätigt werden. Meldungen dieser Art werden beispielsweise mittels eines in den Mobilendgeräten vorgesehenen Programms oder mittels Instruktionen angefordert oder abgewiesen, die vom Teilnehmer an das Mobilfunknetz übertragen werden.

Die ermittelten mobilitätsrelevanten Daten sind auch für weitere Zwecke von Interesse. Beispielsweise sind diese Daten für die Planung und den Unterhalt des Mobilfunknetzes besonders wertvoll. Durch laufende Extraportion von Daten, die während einer Zeitperiode ermittelt wurden, können beispielsweise zukünftige Engpässe oder zukünftig frei werdende Ressourcen ermittelt werden.

Durch das Mobilfunknetz PLMN werden die für die Realisierung des erfindungsgemässen Verfahrens benötigten Programme und Kommunikationsverbindungen zur Verfügung gestellt. Die Infrastruktur des Mobilfunknetzes PLMN kann ferner unter Berücksichtigung der Verkehrswege derart gewählt werden, dass das erfindungsgemässe Verfahren weiter verbesserte Resultate liefert. Beispielsweise werden die entlang dem Verkehrsweg angeordneten Zellen derart Aufenthaltsbereichen des Mobilfunknetzes PLMN zugeordnet, dass an den Enden der Verkehrswege jeweils wenigstens zwei benachbarte Zellen angeordnet sind, die unterschiedlichen Aufenthaltsbereichen des Mobilfunknetzes PLMN zugeordnet sind. Durch diese Massnahme wird ein sich im Idle-Mode befindliches Mobilendgerät gezwungen, den Aufenthaltsbereich zu Beginn des Verkehrsweges zu wechseln und mit dem Mobilfunknetz entsprechend Kontakt aufzunehmen. Sofern beispielsweise zwei Wechsel innerhalb einer bestimmten Zeitperiode erzwungen werden, können Mobilendgeräte im Idle-Mode mit hoher Wahrscheinlichkeit dem betreffenden Verkehrsweg zugeordnet werden. Bei Mobilendgeräten im Dedicated-Mode fällt ein Vielfaches an Daten an, weshalb die Zuordnung der Mobilendgeräte in diesem Zustand leichter fällt.

Das erfindungsgemässe Verfahren ist auch bei Verkehrssystemen anwendbar, bei denen so genannte Repeater eingesetzt werden, wie sie aus der [9], EP 1 775 973 A2 bekannt sind.

Nachfolgend wird die Erfindung anhand von Zeichnungen näher erläutert. Dabei zeigt:
- Figur 1: einen Abschnitt eines erfindungsgemässen zellularen Mobilfunknetzes PLMN, welches einen geographischen Bereich überdeckt, in dem Verkehrswege, insbesondere eine Eisenbahnlinie VW1 und eine Autobahn VW2 vorgesehen sind;
- Figur 2: das zellulare Mobilfunknetz PLMN gemäss Figur 1 mit einer dynamischen Feststation BTS_{D}, die parallel zu einem Eisenbahnzug geführt wird; und
- Figur 3: das zellulare Mobilfunknetz PLMN gemäss Figur 1 mit einer dynamischen Steuereinheit BSC_{D}, oder einem dynamischen Aufenthaltsbereich LA_{D}, der Parallel zu einem Eisenbahnzug geführt wird.

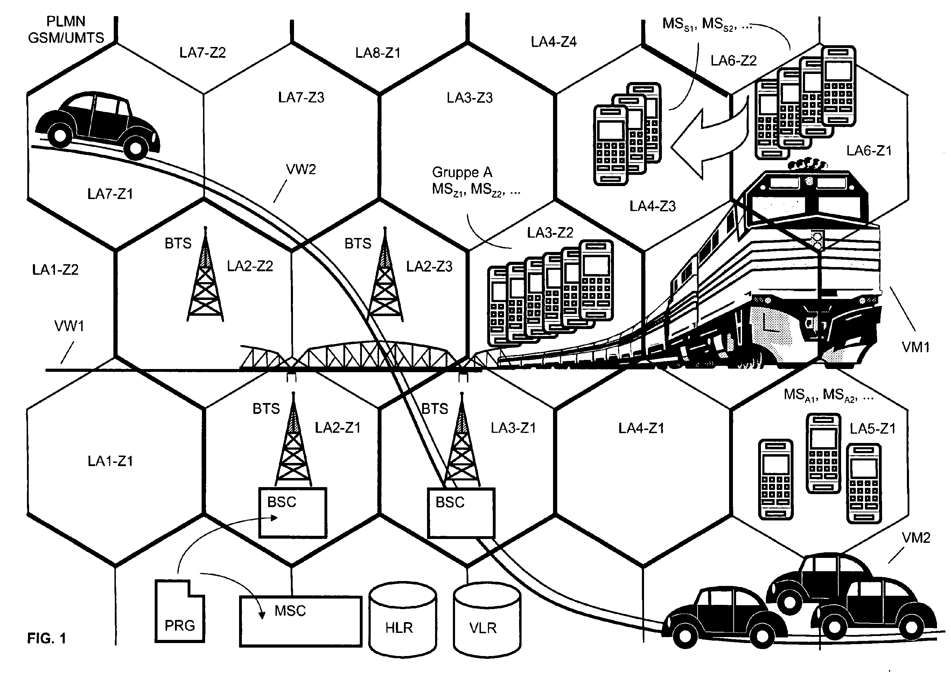

Figur 1 zeigt einen Abschnitt eines erfindungsgemässen zellularen Mobilfunknetzes PLMN mit mehreren Aufenthaltsbereichen LA1, ..., LA8, ..., welche je wenigstens eine Zelle LA_{X}-Z_{Y} aufweisen. Innerhalb des gezeigten Abschnitts verlaufen mehrere Verkehrswege, von denen die Verkehrswege VW1 und VW2, nämlich eine Eisenbahnlinie VW1 und eine Autobahn VW2 exemplarisch gezeigt sind. In Figur 1 sind ferner einzelne Einheiten des Mobilfunknetzes PLMN, nämlich eine mobile Vermittlungszentrale MSC, eine Heimdatei HLR, eine Besucherdatei VLR, Sende- und Empfangsstationen BTS und zugehörige Steuereinheiten BSC, gezeigt, die eingangs kurz und in [1] und [2] im Detail beschrieben sind. Für jeden der gezeigten Aufenthaltsbereiche LA1, ..., LA8, ..., ist vorzugsweise eine Steuereinheit BSC vorgesehen, welche mit den Sende- und Empfangsstationen BTS verbunden ist, die in den zugehörigen Zellen LA_{X}-Z_{Y} des Aufenthaltsbereichs LA_{X} angeordnet sind. Wie in [3] und [4] beschrieben ist, sind die Belastungen in den einzelnen Zellen LA_{X}-Z_{Y} normalerweise unterschiedlich. In der Zelle LA₆-Z₁ des Aufenthaltsbereichs LA6 befinden sich zahlreiche stationär gehaltne Mobilendgeräte MS_{S1}, MS_{S2}, ..., weshalb diese Zelle LA₆-Z₁ stark belastet ist und kaum noch weitere Mobilendgeräte MS übernehmen kann. Durch den entlang der Eisenbahnlinie VW1 geführten Eisenbahnzug VM1 werden zahlreiche Teilnehmer mit Mobilendgeräten MS_{Z1}, MS_{Z2}, ... in Richtung zur Zelle LA₆-Z₁ geführt. Es ist daher davon auszugehen, dass eine Überlastung des Mobilfunknetzes PLMN in der Zelle LA₆-Z₁ auftreten kann, sobald der Eisenbahnzug VM1 diese Zelle LA₆-Z₁ erreicht und zuvor keine vorbeugenden Massnahmen ergriffen werden.

Erfindungsgemässen wird hingegen festgestellt, dass der Eisenbahnzug VM1 eine Gruppe von Mobilendgeräten MS_{Z1}, MS_{Z2}, ... in Richtung zur Zelle LA₆-Z₁ geführt werden, so dass frühzeitig die notwendigen Massnahmen ergriffen und die notwendigen Ressourcen bereit gestellt werden können, indem beispielsweise einige der Mobilendgeräte MS_{S1}, MS_{S2}, ... in eine benachbarte Zelle LA₄-Z₃ transferiert werden.

Dies gelingt anhand des erfindungsgemässen Verfahrens, indem
a) dass durch wenigstens eine Feststation BSS (typischerweise bestehend aus einer Steuereinheit BSC und einer Sende- / Empfangsstation BTS) des Mobilfunknetzes PLMN, die vorzugsweise an einem Ende des Verkehrsweges VW1 liegt, den Mobilendgeräten MS_{Z1}, MS_{Z2}, ... zugehörige, mobilitätsrelevante Mobilendgeräte-Daten erfasst und ausgewertet werden,
b) die Mobilendgeräte MS_{Z1}, MS_{Z2}, ... anhand der mobilitätsrelevanten Mobilendgeräte-Daten dem Verkehrsweg VW1 und/oder dem Eisenbahnzug VM1 zugeordnet werden, und
c) die zueinander korrespondierenden, einem Verkehrsweg und/oder einem Verkehrsmittel zugehörigen Mobilendgeräte MS_{Z1}, MS_{Z2}, ... wenigstens einer, gegebenenfalls Untergruppen aufweisenden, Gruppe A zugeordnet und entsprechende Gruppierungsdaten gebildet werden.

Vorzugsweise werden auch die Position und die Bewegungsrichtung der Mobilendgeräte MS_{Z1}, MS_{Z2}, ... und der Gruppe A bestimmt; wodurch die geplanten Massnahmen präzise und gezielt umgesetzt werden können.

Die mobilitätsrelevanten Mobilendgeräte-Daten werden aus Meldungen und Daten gewonnen, die von den Mobilendgeräten MS_{Z1}, MS_{Z2}, ... für Handover- und Location-Update-Prozesse abgegeben werden, oder aus Meldungen und Daten die aus Statusänderungen der Mobilendgeräte MS resultieren.

Bei GSM-Mobilendgeräten MS im Idle-Mode (Mobilendgeräte eingeschaltet, aber ohne aktive Verbindung) werden Änderungen des Aufenthaltsbereichs LA und entsprechende Meldungen registriert. Fordert eine Mobilendgerät MS eine Bereichsaktualisierung, so liegen damit in der Regel auch die 4 Zeichen lange temporäre Mobilteilnehmeridentität (TMSI) sowie die Kennungen des alten Aufenthaltsbereichs (LAI) vor. Damit ist es möglich, die bisherige Besucherdatei und somit auch die internationale Mobilteilnehmeridentität (IMSI) zu bestimmen. Nachdem der Teilnehmer authentifiziert wurde, teilt die neue Besucherdatei der Heimdatei den Bereichswechsel mit. Daraufhin überträgt die Heimdatei die notwendigen Teilnehmerdaten an die neue Besucherdatei. Durch die genannten Transaktionen resultieren auch die erforderlichen mobilitätsrelevante Mobilendgeräte-Daten, welche es erlauben, Mobilendgeräten MS im Idle-Mode zu erfassen und zu gruppieren. Die Identität des Mobilendgerätes sowie dessen Statusänderungen können ermittelt und erfindungsgemäss verwendet werden.

In einer bevorzugten Ausgestaltung der Erfindung werden die entlang dem Verkehrsweg angeordneten Zellen derart Aufenthaltsbereichen LA1; LA2; ... des Mobilfunknetzes PLMN zugeordnet, dass an den Enden der Verkehrswege jeweils wenigstens zwei benachbarte Zellen LA1-Z2, LA2-Z2 angeordnet sind, die unterschiedlichen Aufenthaltsbereichen LA1; LA2 des Mobilfunknetzes PLMN zugeordnet sind (siehe den Verkehrsweg VW1). Dadurch wird eine Kontaktaufnahme der Mobilendgeräte MS mit dem Mobilfunknetz PLMN auch dann erzwungen, wenn sich diese im Idle-Mode befinden. Dadurch gelingt es somit, auch Mobilendgeräte MS, die sich im Idle-Mode befinden, erfolgreich zu gruppieren.

Bei Mobilendgeräten MS im Dedicated-Mode (Mobilendgeräte eingeschaltet mit einer aktiven Verbindung) werden die von den Mobilendgeräten MS gelieferten Messwerte ausgewertet, die gemäss den Spezifikationen des Mobilfunknetzes für die Handover-Prozesse bestimmt sind. Messwerte für bestehende und zukünftige Mobilfunknetze PLMN können sein:
a) der Empfangspegel der versorgenden und der benachbarten Zellen; und/oder
b) die Signalqualität, insbesondere die Bitfehlerhäufigkeiten der Verbindungen zur versorgenden und zu benachbarten Zellen; und/oder
c) die Schleifenlaufzeit, insbesondere die geschätzte Entfernung des Mobilendgerätes zur versorgenden Feststation und/oder benachbarten Bodenstationen; und/oder
d) die Doppler-Verschiebung; und/oder
e) die empfangene Interferenzleistung.

Verläufe dieser Messwerte geben oft präzise Auskunft über Ort und Verlauf der Bewegung der Mobilendgeräte MS. Verläufe von Messdaten sind in [2], Seiten 222-223 gezeigt. Beispielsweise ist gezeigt, dass der Pegelverlauf, der in die Bestandteile Langzeitmittelwert, Kurzzeitschwund und Abschattung aufgeteilt werden kann, in Abhängigkeit der Bewegung eines Fahrzeugs entlang von Objekten, insbesondere Gebäuden, signifikant ändert. Der Pegelverlauf ist daher charakteristisch für den befahrenen Verkehrsweg. Sofern der Pegelverlauf für einen Verkehrsweg bereits erfasst wurde, kann festgestellt werden, ob für aktuelle registrierte Messdaten zumindest partiell eine Übereinstimmung mit früher registrierten Messdaten beziehungsweise früher registrierten Verläufen von Messdaten vorliegt.

Es ist daher von Vorteil, wenn mobilitätsrelevante Mobilendgeräte-Daten für Test-Mobilendgeräte (MS_{T}) ermittelt werden, indem diese entlang den relevanten Verkehrswegen VW, insbesondere den Transversalen innerhalb einer oder mehrerer Zellen LA_{X}-Z_{Y} geführt werden. Vorzugsweise werden anhand von Mobilendgeräte-Daten Modelle für die Test-Mobilendgeräte MS_{T} erstellt, so dass Mobilendgeräte-Daten anhand von neuronalen Netzwerken ausgewertet werden können (die Verwendung neuronaler Netzwerke ist in [7] beschrieben). Die neuronalen Netzwerke werden vorzugsweise mit einer Vielzahl von Daten trainiert, die anhand der Test-Mobilendgeräte MS_{T} ermittelt wurden. Die Messdaten eindeutig identifizierter Mobilendgeräte MS können ferner für das Training des neuronalen Netzwerks verwendet werden.

Vorzugsweise werden die mobilitätsrelevanten Mobilendgeräte-Daten unter Berücksichtigung des früher registrierten Mobilitätsverhaltens der Mobilendgeräte MS ausgewertet. Falls beispielsweise ein Wechsel des Aufenthaltsbereichs LA für ein Mobilendgerät MS registriert wurde, dessen Verhalten bereits im Mobilfunknetz PLMN registriert ist, so kann, gegebenenfalls unter Berücksichtigung der Uhrzeit und/oder des Datums eine Zuordnung mit hoher Treffer-Wahrscheinlichkeit vorgenommen werden. Durch Berücksichtigung mehrerer Faktoren können Fehlzuordnungen praktisch ausgeschlossen werden.

Durch Berücksichtigung weiterer Faktoren, beispielsweise Fahrplänen oder gemeldeten Fahrtdaten sowie der aktuellen Uhrzeit kann ein Verkehrsmittel vollständig identifiziert werden. Beispielsweise wird festgestellt, dass sich die gruppierten Mobilendgeräte MS im Eisenbahnzug Nr. XYZ befinden, der gemäss Fahrplan um 10:15 Uhr gestartet ist und gemäss aktuellen Fahrtdaten mit einer Verspätung von 15 Minuten unterwegs ist. Für diesen Eisenbahnzug Nr. XYZ können zahlreiche Informationen bereitgehalten und an die gruppierten Teilnehmer abgegeben werden. Beispielsweise können Informationen zum Eisenbahnzug selbst, beispielsweise zu den im Eisenbahnzug zur Verfügung stehenden Dienstleistungen, oder mit dem Eisenbahnzug zusammenhängende Informationen, wie die erwartete Ankunftszeit sowie Anschlüsse zu weiteren Verbindungen, im Mobilfunknetz PLMN gespeichert und zu den Teilnehmern übertragen werden.

Vorzugsweise wird vorgesehen, dass Teilnehmer derartige Informationen beziehungsweise Dienstleistungen des Mobilfunknetzes PLMN bestellen oder ablehnen können. Dazu können die Mobilendgeräte MS ein Programm aufweisen, mittels dessen die Präferenzen des Teilnehmers an das Mobilfunknetz PLMN gemeldet werden.

Nach Ermittlung der Zugehörigkeit der Mobilendgeräte MS zu einem Verkehrsweg VW und/oder einem Verkehrsmittel VM können entsprechende Gruppen A, B, ... gebildet werden. In die Gruppe A werden beispielsweise alle Mobilendgeräte MS_{Z1}, MS_{Z2}, ... aufgenommen, die in Figur 1 gezeigten Eisenbahnzug VM1 zugehören. Für jede Gruppe werden dann entsprechende Gruppierungsdaten gebildet, welche beispielsweise die Anzahl der gruppierten Mobilendgeräte MS_{Z1}, MS_{Z2}, ..., die Anzahl der aktiven Verbindungen, und gegebenenfalls die Anforderungen der Mobilendgeräte MS_{Z1}, MS_{Z2}, ... an das Mobilfunknetz PLMN beschreiben.

Nachdem die Gruppierungsdaten gebildet wurden, können diese an die Feststationen BTS, BSC der Zellen LA_{X+A}-Z_{Y+B} weitergereicht werden, die an diesem Verkehrsweg VW1 liegen und vom Eisenbahnzug VM1 noch erreicht werden, so dass für die betreffenden Zellen LA_{X+A}-Z_{Y+B} die erforderlichen Ressourcen bereitgestellt werden können. Besonders wesentlich ist dies auch im Bereich von Verkehrsknotenpunkten, beispielsweise in Zelle LA2-Z3, in der eine hohe Belastung auftreten kann, wenn mehrere Verkehrsmittel, beispielsweise der Eisenbahnzug VM1 und uns eine Gruppe von Autos VM2, die sich entlang einer Autobahn VW2 belegen, den Knotenpunkt gleichzeitig durchfahren.

In einer weiteren bevorzugten Ausgestaltung, die in Figur 2 illustriert ist, werden die Gruppierungsdaten einer dynamischen Feststation BTS_{D} zugestellt, für die Radio Ressourcen in den entlang dem Verkehrsweg angeordneten Feststationen BSS, BSC, BTS reserviert werden. Die dynamische Feststation BTS_{D}, welche grundsätzlich die Funktionen einer normalen Feststation BTS aufweist, kann daher entlang dem Verkehrsweg VW1 geführt werden und jeweils die reservierten Radio Ressourcen der besuchten stationären Feststation BTS verwenden.

Durch eine kontinuierliche Messung der Position der gruppierten Mobilendgeräte MS_{Z1}, MS_{Z2}, ... mit den oben beschriebenen Massnahmen gelingt es, die dynamische Feststation BTS_{D} zumindest annähernd auf gleicher Höhe mit den gruppierten Mobilendgeräten MS_{Z1}, MS_{Z2}, ... entlang dem Verkehrsweg VW1 zu führen, so dass jegliche Handover der Mobilendgeräte MS_{Z1}, MS_{Z2}, ... beim Durchqueren der entlang dem Verkehrsweg VW1 angeordneten Zellen LA_{X+A}-Z_{Y+B} sowie ein entsprechender Signalisierungsaufwand entfallen.

Die Steuerung der dynamischen Bodenstation BTS_{D} erfolgt mittels einer stationären oder dynamischen Steuereinheit BSC, BSC_{D}, welche dafür sorgt, dass die Radio Ressourcen für die dynamische Feststation BTS_{D} reserviert, besetzt und wieder freigegeben werden. Die Funktionalitäten der Steuereinheit BSC, BSC_{D} können daher in einer einzigen stationären Steuereinheit BSC realisiert werden, oder zusammen mit der dynamischen Bodenstation BTS_{D} entlang dem Verkehrsweg VW1 weitergereicht werden. Beispielsweise kann diese Funktionalität auch in einer mobilen Vermittlungszentrale MSC oder in einer zentralisierten, proprietären Einheit des Mobilfunknetzes PLMN realisiert werden. Das Mobilfunknetz PLMN stellt daher die für die Realisierung der Erfindung erforderlichen Ressourcen, wie Hardwaremodule, Softwaremodule, Kommunikationsverbindungen, Radioressourcen zur Verfügung. Bei der Verwendung einer dynamischen Feststation BTS_{D} werden die am Verkehrsweg VW1 liegenden Feststationen BTS der zu besuchenden Zellen ebenfalls rechtzeitig über die Annäherung der dynamischen Feststation BTS_{D} informiert, so dass die erforderlichen Radioressourcen bereitgestellt werden können.

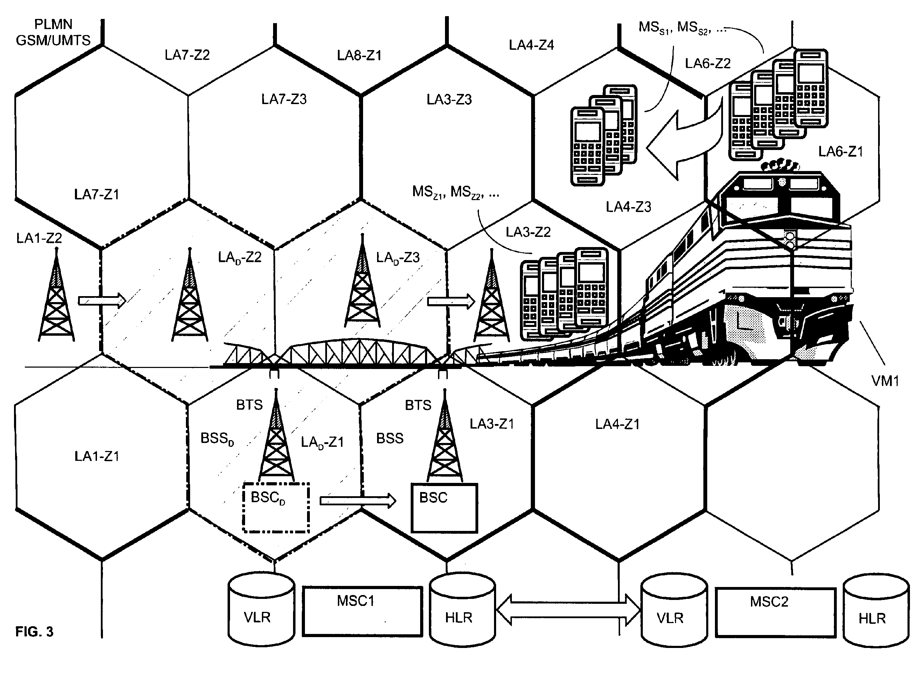

In der in Figur 3 illustrierten Ausgestaltung der Erfindung wird der Signalisierungsaufwand reduziert, indem die von der Feststation BSC, BTS ermittelten Gruppierungsdaten einer dynamischen Steuereinheit BSS_{D}, BSC_{D} zugestellt werden, der ein dynamischer Aufenthaltsbereich LA_{D} zugeordnet ist, welcher zumindest annähernd auf gleicher Höhe mit den gruppierten Mobilendgeräten MS_{Z1}, ..., geführt wird, so dass Änderungen des Aufenthaltsbereichs während einer Verschiebung entlang dem Verkehrsweg VW1 entfallen.

Die dynamischen Steuereinheit BSS_{D}, BSC_{D} verwendet die Infrastruktur des Festnetzes und vorzugsweise auch dessen Steuerkanäle, über die zusätzliche Daten übertragbar sind. Die gruppierten Mobilendgeräte MS_{Z1}, ..., können daher die erforderlichen Daten den Steuerkanälen entnehmen und feststellen, ob sie noch immer im Bereich des dynamischen Aufenthaltsbereichs LA_{D} sind. Erst wenn der Kontakt zum dynamischen Aufenthaltsbereich verloren geht, ist eine konventionelle Aktualisierung des Aufenthaltsbereichs erforderlich. Dies geschieht beispielsweise dann, wenn der Teilnehmer den Zielbahnhof erreicht hat, und der dynamische Aufenthaltsbereich LA beziehungsweise die dynamische Feststation BSC_{D} nicht mehr weitergeführt wird.

Um einer dynamischen Feststation BTS_{D} und/oder einer dynamischen Steuereinheit BSC_{D} oder einem dynamischen Aufenthaltsbereich LA_{D} folgen und mit diesen kommunizieren zu können, weisen Mobilendgerät MS vorzugsweise ein entsprechendes Betriebsprogramm auf, mittels dessen sie beispielsweise die den dynamischen Einheiten BTS_{D} und/oder BSC_{D} oder LA_{D} zugehörigen Daten aus den Steuerkanälen des Mobilfunknetzes PLMN entnehmen und verarbeiten können. Vorzugsweise weist ein erfindungsgemässes Mobilendgerät MS auch wenigstens einen Speicherbereich auf, in dem die den dynamischen Einheiten BTS_{D} und/oder BSC_{D} oder LA_{D} zugehörigen Daten speicherbar sind.

### Literaturverzeichnis

[1] Michel Mouly, Marie-Bernadette Pautet, The GSM System for Mobile Communications, Cell & Sys Verlag, 1992
[2] Bernhard Walke, Mobilfunknetze und ihre Protokolle, Band 1, B.G. Teubner Verlag, Stuttgart 2000
[3] Guangbin Fan, Ivan Stojmenovic, und Jingyuan Zhang, A Triple Layer Location Management Strategy for Wireless Cellular Networks, Computer Science Department, The University of Alabama
[4] WO 98/52375 A1
[5] WO 00/74417 A1
[6] US 5'867'785
[7] US 5'960'391
[8] EP 1 056 063 A1
[9] EP 1 775 973 A2

## Patentansprüche

1. Verfahren für die Mobilitätsverwaltung von Mobilendgeräten (MS) in einem Mobilfunknetz (PLMN), wobei
a) wenigstens eine Feststation (BSS, BSC, BTS) des Mobilfunknetzes (PLMN) den Mobilendgeräten (MS) zugehörige, mobilitätsrelevante Mobilendgeräte-Daten erfasst und ausgewertet werden,
b) die Mobilendgeräte (MS) anhand der mobilitätsrelevanten Mobilendgeräte-Daten einem Verkehrsweg und/oder einem Verkehrsmittel zugeordnet werden, und
c) die zueinander korrespondierenden, einem Verkehrsweg und/oder einem Verkehrsmittel zugehörigen Mobilendgeräte (MS) wenigstens einer Gruppe (A) zugeordnet und entsprechende Gruppierungsdaten gebildet werden, die entweder
einer dynamischen Feststation (BSS_{D}, BSC_{D}, BTS_{D}) zugestellt werden, für die Radio Ressourcen in den entlang dem Verkehrsweg angeordneten Feststationen (BSS, BSC, BTS) reserviert werden, und die parallel mit den gruppierten Mobilendgeräten (MS_{A1}, MS_{A2}) geführt wird; oder
einer dynamischen Steuereinheit (BSS_{D}, BSC_{D}) zugestellt werden, der ein dynamischer Aufenthaltsbereich (LA_{D}) zugeordnet ist, welcher mit den gruppierten Mobilendgeräten (MS_{A1}, MS_{A2}) geführt wird, so dass Änderungen des Aufenthaltsbereichs während der Fahrt entlang dem Verkehrsweg entfallen.

2. Verfahren nach Anspruch 1, **dadurch gekennzeichnet, dass** die Position und/oder die Bewegungsrichtung der Mobilendgeräte (MS) und/oder der Gruppe (A) von Mobilendgeräten (MS_{A1}, MS_{A2}), vorzugsweise ein Mittelwert der Positionen der einzelnen Mobilendgeräte (MSA₁, MS_{A2}), bestimmt wird und/oder dass innerhalb der Gruppe (A) Untergruppen mit Mobilendgeräten (MS_{A1}, MS_{A2}), gebildet werden, die zumindest annähernd gleiche Eigenschaften, wie Berechtigungen oder Positionen innerhalb des Verkehrsmittels aufweisen.

3. Verfahren nach Anspruch 1 oder 2, **dadurch gekennzeichnet, dass** die mobilitätsrelevanten Mobilendgeräte-Daten aus Meldungen und Daten gewonnen werden, die von den Mobilendgeräten (MS) für Handover- und Location Update-Prozessen abgegeben werden oder die aus Statusänderungen der Mobilendgeräte (MS) resultieren und/oder dass die mobilitätsrelevanten Mobilendgeräte-Daten unter Berücksichtigung des früher registrierten Mobilitätsverhaltens der Mobilendgeräte (MS) oder unter Berücksichtigung von Daten, insbesondere Reisedaten oder Terminen, ausgewertet werden, die in einer Datenbank der Mobilendgeräte (MS) oder des Mobilfunknetzes (PLMN), gegebenenfalls einer Agenda, gespeichert sind.

4. Verfahren nach Anspruch 1, 2 oder 3, **dadurch gekennzeichnet, dass** die mobilitätsrelevanten Mobilendgeräte-Daten aus proprietären oder normierten Meldungen und/oder Messungen, wie RR-Channel-Request Meldungen oder Location Update-Request- Meldungen oder aus Messungen für Handover-Prozesse, insbesondere der Registrierung des Verlaufs der Messwerte,
a) des Empfangspegels der versorgenden und der benachbarten Zellen; und/oder
b) der Signalqualität, insbesondere der Bitfehlerhäufigkeiten der Verbindungen zur versorgenden und zu benachbarten Zellen; und/oder
c) der Schleifenlaufzeit, insbesondere der geschätzten Entfernung des Mobilendgerätes (MS) zur versorgenden Feststation und/oder benachbarten Bodenstationen; und/oder
d) der Doppler-Verschiebung; und/oder
e) der empfangenen Interferenzleistung
ermittelt werden.

5. Verfahren nach einem der Ansprüche 1-4, **dadurch gekennzeichnet, dass** mobilitätsrelevanten Mobilendgeräte-Daten für Test-Mobilendgeräte ermittelt werden, währenddem diese entlang den relevanten Verkehrswegen, insbesondere den Transversalen innerhalb einer oder mehrerer Zellen geführt werden und/oder, dass anhand von Mobilendgeräte-Daten Modelle für die Test-Mobilendgeräte erstellt werden.

6. Verfahren nach Anspruch 5, **dadurch gekennzeichnet, dass** die mobilitätsrelevanten Mobilendgeräte-Daten der zu gruppierenden Mobilendgeräte (MS) mit den Mobilendgeräte-Daten der Test-Mobilendgeräte oder gegebenenfalls mittels eines neuronalen Netzwerks mit den für die Test-Mobilendgeräte erstellten Modellen verglichen und zu gruppierende Mobilendgeräte (MS) einem Verkehrsweg zugeordnet werden.

7. Verfahren nach Anspruch 5 oder 6, **dadurch gekennzeichnet, dass** die zu gruppierenden Mobilendgeräten (MS) einem zumindest teilweise identifizierten Verkehrsmittel, gegebenenfalls einem Bus oder einer Eisenbahn zugeordnet werden, vorzugsweise indem Fahrpläne, gegebenenfalls aktuelle Fahrtdaten und/oder die aktuelle Uhrzeit und/oder das Datum berücksichtigt werden.

8. Verfahren nach Anspruch 7, **dadurch gekennzeichnet, dass** den einem Verkehrsmittel zugeordneten, gegebenenfalls gruppierten Mobilendgeräten (MS) in Verbindung mit dem betreffenden Verkehrsmittel stehende Nachrichten zugesandt werden, welche vorzugsweise mittels eines in den Mobilendgeräten (MS) vorgesehenen Programms oder mittels an das Mobilfunknetz (PLMN) abgegebenen Instruktionen angefordert oder abgewiesen werden können.

9. Verfahren nach einem der Ansprüche 1-8, **dadurch gekennzeichnet, dass** für jeden Verkehrsweg die sequentiell durchlaufenen Zellen registriert werden, und, dass die von der Feststation (BSS, BSC, BTS) ermittelten Gruppierungsdaten der Feststation (BSS, BSC, BTS) zugestellt werden, welche wenigstens die nächste Zelle verwaltet, die von einer zugehörigen Gruppe von Mobilendgeräten (MS_{A1}, MS_{A2}), als nächstes erreicht wird, so dass die erforderlichen Massnahmen getroffen werden können, um diese nächste Zelle für den bevorstehenden Handover vorzubereiten.

10. Verfahren nach Anspruch 9, **dadurch gekennzeichnet, dass** eine Übernahme der Mobilendgeräte (MS_{A1}, MS_{A2}) durch die dynamische Steuereinheit (BSS_{D}, BSC_{D}) sowie eine Kennung des dynamischen Aufenthaltsbereichs (LA_{D}) den Mobilendgeräten (MS_{A1}, MS_{A2}) über einen Steuerkanal, wie den Broadcast Control Channel BCCH oder einen Dedicated Control Channel DCCH, SDCCH, SACCH mitgeteilt und bestätigt wird, so dass eine Aktualisierung Aufenthaltsbereichs (LA) erst dann notwendig wird, wenn die erhaltene Kennung des Aufenthaltsbereichs (LA) nicht mehr mit den später über den Steuerkanal erhaltenen Kennung des dynamischen Aufenthaltsbereichs (LA_{D}) übereinstimmt.

11. Verfahren nach einem der Ansprüche 1-9, **dadurch gekennzeichnet, dass** die von der Feststation (BSS, BSC, BTS) ermittelten Gruppierungsdaten ausgewertet werden, um die momentane oder zukünftige Verkehrssituation auf dem betreffenden Verkehrsweg (VW1) zu beurteilen oder im voraus zu berechnen und/oder um zukünftig erforderliche insbesondere verkehrstechnische Ressourcen, wie Transportmittel oder Verpflegung, zu berechnen und bereit stellen zu können.

12. Mobilfunknetz (PLMN) geeignet zur Durchführung des Verfahrens nach einem der Ansprüche 1-12, wobei wenigstens eine Feststation (BSS, BSC, BTS) vorgesehen ist, die über Mittel verfügt, so dass sie
a) den Mobilendgeräten (MS) zugehörige, mobilitätsrelevante Mobilendgeräte-Daten erfassen kann;
b) Mobilendgeräte (MS) anhand der Mobilendgeräte-Daten einem Verkehrsweg und/oder einem Verkehrsmittel zuordnen und vorzugsweise die Bewegungsrichtung der Mobilendgeräte (MS) bestimmen kann; und
c) zueinander korrespondierende, einem Verkehrsweg und/oder einem Verkehrsmittel zugehörige Mobilendgeräte (MS) einer Gruppe (A) zuordnen und entsprechende Gruppierungsdaten bilden, die
entweder einer dynamischen Feststation (BSSD, BSCD, BTSD) zuführbar sind, für die Radio Ressourcen in den entlang dem Verkehrsweg angeordneten Feststationen (BSS, BSC, BTS) reservierbar sind, und die mit den gruppierten Mobilendgeräten (MSA1, MSA2) parallel führbar ist, indem sequentiell die erforderlichen Ressourcen des Mobilfunknetzes (PLMN) entlang dem Verkehrsweg belegbar und wieder freigebbar sind; oder
einer dynamischen Steuereinheit (BSS_{D}, BSC_{D}) zuführbar sind, der ein dynamischer Aufenthaltsbereich (LA_{D}) zugeordnet ist, welcher mit den gruppierten Mobilendgeräten (MS_{A1}, MS_{A2}) führbar ist, so dass Änderungen des Aufenthaltsbereichs während der Fahrt entlang dem Verkehrsweg entfallen.

13. Mobilfunknetz (PLMN) nach Anspruch 12, **dadurch** gekenntzeichnet, dass die Feststation (BSS, BSC, BTS) wenigstens einen Prozessor, einen Datenspeicher und einen Programmspeicher sowie ein darin enthaltenes Programm (PRG) aufweist, welches zur Auswertung von Meldungen und Daten, die von den Mobilendgeräten (MS) während Handover- und Location Update-Prozessen abgegeben werden oder die aus Statusänderungen der Mobilendgeräte (MS) resultieren, sowie zur entsprechenden Gruppierung der Mobilendgeräte (MS) geeignet ist.

14. Mobilfunknetz (PLMN) noch Anspruch 13, **dadurch gekennzeichnet, dass** im Datenspeicher mobilitätsrelevante Mobilendgeräte-Daten oder gegebenenfalls mittels neuronaler Netzwerke gebildete Modelle für Test-Mobilendgeräte abgelegt sind, die mit den aktuellen erfassten mobilitätsrelevanten Mobilendgeräte-Daten vergleichbar sind, um die Mobilendgeräte (MS) einem Verkehrsweg oder einem Verkehrsmittel zuordnen und gruppieren zu können.

15. Mobilfunknetz (PLMN) nach einem der Ansprüche 12-14, **dadurch gekennzeichnet, dass** mittels des Programms (PRG) für jeden Verkehrsweg (VW1) die von den Mobilendgeräten (MS) sequentiell durchlaufenen Zellen registrierbar sind, und, dass die von der Feststation (BSS, BSC, BTS) ermittelten Gruppierungsdaten der Feststation (BSS, BSC, BTS) zustellbar sind, welche wenigstens die nächste Zelle verwaltet, die von einer zugehörigen Gruppe von Mobilendgeräten (MS_{A1}, MS_{A2}) als nächstes erreicht wird, und dass die erforderlichen Massnahmen durchführbar sind, um diese nächste Zelle, gegebenenfalls durch Lastverteilung, für den bevorstehenden Handover vorzubereiten.

16. Mobilfunknetz (PLMN) nach einem der Ansprüche 13-15, **dadurch gekennzeichnet, dass** die Position der zugeordneten Gruppe von Mobilendgeräten (MS_{A1}, MS_{A2}) bestimmbar ist.

17. Mobilfunknetz (PLMN) Verfahren nach Anspruch 16, **dadurch gekennzeichnet, dass** jede stationären Feststation (BSS, BSC, BTS) und/oder die dynamische Feststation (BSS_{D}, BSC_{D}, BTS_{D}) wenigstens die Funktionen einer Sende- und Empfangsstation (BTS), gegebenenfalls zusätzlich die Funktion einer zugehörigen Steuereinheit (BSC) aufweist, welche von einer übergeordneten Steuereinheit verwaltet wird.

18. Mobilfunknetz (PLMN) nach einem der Ansprüche 12 - 17, **dadurch gekennzeichnet, dass** die entlang dem Verkehrsweg angeordneten Zellen derart Aufenthaltsbereichen (LA1; LA2; ...) des Mobilfunknetzes (PLMN) zugeordnet sind, dass an den Enden der Verkehrswege jeweils wenigstens zwei benachbarte Zellen angeordnet sind, die unterschiedlichen Aufenthaltsbereichen (LA1; LA2; ...) des Mobilfunknetzes (PLMN) zugeordnet sind.

19. Mobilendgerät (MS) mit einem Betriebsprogramm, das zur Durchführung des Verfahrens nach einem der Ansprüche 1-11, insbesondere zum Datenaustausch mit einer dynamischen Feststation (BTS_{D}) und/oder einer dynamischen Steuereinheit (BSC_{D}), geeignet ist.

## Claims

1. Method for the mobility management of mobile stations (MS) in a mobile radio network (PLMN), wherein,
a) at least a fixed station (BSS, BSC, BTS) of the mobile radio network (PLMN) collects and evaluates mobility-related mobile station-data associated to the mobile stations (MS),
b) the mobile stations (MS) are assigned by means of the mobility-related mobile station-data to a transportation route and/or a means of transportation, and
c) the mobile stations (MS) that correspond to one another and that belong to a transportation route and/or a means of transportation are assigned to at least one group (A) and corresponding grouping data are formed, which are
forwarded either to a dynamic fixed station (BSS_{D}, BSC_{D}, BTS_{D}), for which radio resources are reserved in the fixed stations (BSS, BSC, BTS) located along the transportation route and which is guided in parallel with the grouped mobile stations (MS_{A1}, MS_{A2}, ...) ; or
forwarded to a dynamic control unit (BSS_{D}, BSC_{D}), to which a dynamic location area (LA_{D}) is assigned, which is guided with the grouped mobile stations (MS_{A1}, MS_{A2}, ...), so that changes of the of the location area while driving along the transportation route are omitted.

2. Method according to claim 1, **characterised in that** the position and/or the direction of movement of the mobile stations (MS) and/or the group (A) of mobile stations (MS_{A1}, MS_{A2}, ...), preferably an average value of the positions of the individual mobile stations (MS_{A1}, MS_{A2}, ...), is determined and/or that within group (A) sub-groups with mobile stations (MS_{A1}, MS_{A2}, ...) are formed, which exhibit at least approximately the the same properties, such as authorizations or positions inside of the means of transportation.

3. Method according to claim 1 or 2, **characterised in that** the mobility-related mobile station-data are obtained from messages and data, which are emitted by the mobile stations (MS) for handover- and location update-procedures or which result from status changes of the mobile stations (MS) and/or that the mobility-related mobile station-data are evaluated with regard to the previously registered mobility behaviour of the of mobile stations (MS) or with regard to data, particularly travel data or dates, which are stored in a database of the mobile stations (MS) or of the mobile radio network (PLMN), if appropriate in an agenda.

4. Method according to claim 1, 2 or 3, **characterised in that** the mobility-related mobile stations-data are determined from proprietary or standardized messages and/or measurements, such as RR-Channel-Request-messages or Location Update-Request-messages or from measurements for handover processes, particularly the registration of the course of the measured values,
a) of the receiving level of the serving and the adjacent cells; and/or
b) of the signal quality, particularly the bit error rate of the connection to the serving and to adjacent cells; and/or
c) of the loop runtime, particularly the estimated distance of the mobile terminal (MS) to the serving fixed station and/or adjacent base stations; and/or
d) of the Doppler-shift; and/or
e) of the received interference power.

5. Method according to one of the claims 1-4, **characterised in that** mobility-related mobile station-data are determined for test-mobile stations, while they are guided along the relevant transportation routes, particularly the transversals within one or more cells and/or, that by means of mobile station-data models are established for the test-mobile stations.

6. Method according to claim 5, **characterised in that** the mobility-related mobile station-data of the mobile stations (MS) to be grouped are compared with the mobile station-data of the test-mobile stations or, if appropriate by means of a neural network, with the models established for the test-mobile stations and mobile stations (MS) to be grouped are assigned to a transportation route.

7. Method according to claim 5 or 6, **characterised in that** the mobile stations (MS) to be grouped are assigned to a means of transportation that at least partially has been identified, if appropriate to a bus or a train, preferably by taking timetables, if appropriate current travel data and/or the current time and/or the date into account.

8. Method according to claim 7, **characterised in that** messages relating to the concerned means of transportation are sent to the mobile stations (MS) that are assigned to a means of transportation and are possibly grouped, which messages are preferably requested or rejected by means of a program provided in the mobile stations (MS) or by means of instructions sent to the mobile radio network (PLMN).

9. Method according to one of the claims 1-8, **characterised in that** the cells sequentially traversed are registered for each transportation route, and, that the grouping data determined by the fixed station (BSS, BSC, BTS) are forwarded to the fixed station (BSS, BSC, BTS), which governs at least the next cell, which is reached next by a related group of mobile stations (MS_{A1}, MS_{A2}, ...), so that the necessary measures can be taken in order to prepare the next cell for the upcoming handover.

10. Method according to claim 9, **characterised in that** a takeover of the mobile stations (MS_{A1}, MS_{A2}, ...) by the dynamic control unit (BSS_{D}, BSC_{D}) as well as a code of the dynamic location area (LA_{D}) is communicated and confirmed to the mobile stations (MS_{AI}, Mesa2, ...) via a control channel, such as the Broadcast Control Channel BCCH or the Dedicated Control Channel DCCH, SDCCH, SACCH, so that an update of the location area (LA) is required only then, when the received code of the location area (LA) does no longer match the code of the dynamic location area (LA_{D}) that later has been received via the control channel.

11. Method according to one of the claims 1-9, **characterised in that** the grouping data determined by the fixed station (BSS, BSC, BTS) are evaluated, in order to asses or to calculate in advance the current or future traffic situation on the related transportation route (VW1) and/or in order to be able to calculate and provide resources, particularly traffic related resources, such as transportation media or catering, which are required in the future.

12. Mobile radio network (PLMN) designed for the implementation of the method according to one of the claims 1-12, wherein at least a fixed station (BSS, BSC, BTS) is provided, which comprises means, so that it
a) can collect mobility-related mobile station-data relating to the mobile stations (MS);
b) can assign mobile stations (MS) to a transportation route and/or to a means of transportation by means of mobile station-data and preferably can determine the direction of movement of the mobile stations (MS); and
c) can assign mobile stations (MS) corresponding to one another and belonging to a transportation route and/or to a means of transportation to a group (A) and can form corresponding grouping data, which can be forwarded either
to a dynamic fixed station (BSSD, BSCD, BTSD), for which radio resources can be reserved in the fixed stations (BSS, BSC, BTS) located along the transportation route, and which can be guided in parallel with the grouped mobile stations (MS_{A1}, MS_{A2}, ...), by sequentially occupying and releasing the required resources of the mobile radio network (PLMN) along the transportation route; or
to a dynamic control unit (BSS_{D}, BSC_{D}), to which a dynamic location area (LA_{D}) is assigned, which can be guided with the grouped mobile stations (MS_{A1}, MS_{A2}, ...), so that changes of the of the location area while driving along the transportation route are omitted.

13. Mobile radio network (PLMN) according to claim 12, **characterised in that** the fixed station (BSS, BSC, BTS) comprises at least one processor, a data storage and a program memory as well as program (PRG) stored therein, which is capable for the evaluation of messages and data, which are emitted by the mobile stations (MS) during handover- and location update-procedures or which result from status changes of the mobile stations (MS), and which is capable for the corresponding grouping of the mobile stations (MS).

14. Mobile radio network (PLMN) according to claim 13, **characterised in that** mobility-related mobile station-data or models for test-mobile stations, that are formed if appropriate by means of neural networks, are stored in a database, which can be compared with currently captured mobility-related mobile station-data, in order to group and assign the mobile stations (MS) to a transportation route or to a means of transportation.

15. Mobile radio network (PLMN) according to one of the claims 12-14, **characterised in that** by means of the programs (PRG) for each transportation route (VW1) the cells sequentially traversed by the mobile stations (MS) can be registered, and, that the grouping data determined by the fixed station (BSS, BSC, BTS) can be forwarded to the fixed station (BSS, BSC, BTS), which governs at least the next cell, which is reached next by a related group of mobile stations (MS_{A1}, MS_{A2}; ...), and that the necessary measures can be taken in order to prepare the next cell for the upcoming handover.

16. Mobile radio network (PLMN) according to one of the claims 13-15, **characterised in that** the position of the assigned group of mobile stations (MS_{A1}, MS_{A2}, ...) can be determined.

17. Mobile radio network (PLMN) Method according to claim 16, **characterised in that** each stationary fixed station (BSS, BSC, BTS) and/or the dynamic fixed station (BSS_{D}, BSC_{D}, BTS_{D}) comprises at least the functions of a transmitting and receiving station (BTS), if appropriate additionally the function of a related control unit (BSC), which is governed by a higher-ranking control unit.

18. Mobile radio network (PLMN) according to one of the claims 12 - 17, **characterised in that** the cells arranged along the transportation route are assigned to location areas (LA1; LA2; ...) of the mobile radio network (PLMN) in such a way, that at the ends of the transportation routes always at least two neighbouring cells are located, that are assigned to different location areas (LA1; LA2; ...) of the mobile radio network (PLMN).

19. Mobile station (MS) with an operating program, which is suitable for the implementation of the method according to one of the claims 1-11, particularly for the exchange of data with a dynamic fixed station (BTS_{D}) and/or a dynamic control unit (BSC_{D}).

## Revendications

1. Procédé pour la gestion de la mobilité de terminaux (MS) dans un réseau de téléphonie mobile (PLMN),
a) au moins une station de base (BSS, BSC, BTS) du réseau de téléphonie mobile (PLMN) relève et analyse les données de mobilité associées aux terminaux mobiles (MS),
b) les terminaux mobiles (MS) sont associés à l'aide des données de mobilité des terminaux à un trajet et/ou un moyen de transport, et
c) les terminaux mobiles (MS) correspondants entre eux, associés à un trajet et/ou un moyen de transport, sont au moins attribués à un groupe (A) et des données de regroupement correspondantes sont formées, lesquelles
sont remises soit à une station de base dynamique (BSS_{D}, BSC_{D}, BTS_{D}) pour laquelle des ressources sont réservées dans les stations de base disposées le long du trajet (BSS, BSC, BTS) et qui est guidée parallèlement avec les terminaux mobiles regroupés (MS_{A1}, MS_{A2}, ...) ; ou
sont remises à une unité de commande dynamique (BSS_{D}, BSC_{D}) qui est affectée à une zone dynamique de séjour (LA_{D}) qui est guidée parallèlement avec les terminaux mobiles regroupés (MS_{A1}, MS_{A2}, ...) de sorte que des modifications de la zone de séjour ne sont pas nécessaires en cours de route le long du trajet.

2. Procédé selon la revendication 1, **caractérisé en ce que** la position et/ou la direction de déplacement des terminaux (MS) et/ou du groupe (A) de terminaux mobiles (MS_{A1}, MS_{A2}, ...), de préférence une valeur moyenne des positions de chacun des terminaux mobiles (MS_{A1}, MS_{A2}, ...), sont définies et/ou **en ce qu'**à l'intérieur du groupe (A) des sous-groupes sont formés avec des terminaux mobiles (MS_{A1}, MS_{A2}, ...), groupes qui présentent au moins des propriétés semblables telles que des autorisations ou des positions à l'intérieur du moyen de transport.

3. Procédé selon la revendication 1 ou 2, **caractérisé en ce que** les données de mobilité des terminaux sont obtenues à partir de messages et de données qui sont émis par les terminaux (MS) pour des processus de mise à jour, de localisation et de transfert intercellulaire ou qui résultent de modifications de statuts des terminaux mobiles (MS) et/ou **en ce que** les données de mobilité des terminaux mobiles sont analysées en tenant compte du comportement de mobilité enregistré précédemment des terminaux mobiles (MS) ou en tenant compte de données, en particulier de données de voyages ou de rendez-vous, qui sont stockées dans une banque de données des terminaux mobiles (MS) ou du réseau de téléphonie mobile (PLMN), éventuellement dans un agenda.

4. Procédé selon la revendication 1, 2 ou 3, **caractérisé en ce que** les données de mobilité de terminaux mobiles sont déterminées à partir de messages propriétaires ou normalisés et/ou de mesure, tels que des messages de demande de canal de ressources radio (RR-Channel-Request) ou de demande de mise à jour de localisation (Location Update-Request) ou de mesures pour des processus de transfert intercellulaire, en particulier de l'enregistrement de la courbe des valeurs de mesure,
a) du niveau de réception des cellules adjacentes et à distribuer ; et/ou
b) de la qualité de signal, en particulier de la fréquence d'erreur binaire des connexions avec les cellules à distribuer et des cellules adjacentes ; et/ou
c) de la durée de boucle, en particulier de l'éloignement estimé du terminal mobile (MS) par rapport à la station de base à distribuer et/ou aux stations de sol adjacentes; et/ou
d) du décalage Doppler ; et/ou
e) de la puissance d'interférence reçue.

5. Procédé selon l'une des revendications 1 à 4, **caractérisé en ce que** des données de mobilité pour des terminaux mobiles test sont déterminées pendant que ces derniers sont guidés le long de trajets pertinents, en particulier des transversales à l'intérieur d'une ou de plusieurs cellules et/ou **en ce qu'**à l'aide des données de terminaux mobiles, des modèles sont établis pour des terminaux mobiles test.

6. Procédé selon la revendication 5, **caractérisé en ce que** les données de mobilité des terminaux mobiles à regrouper (MS) sont comparées avec des données de mobilité des terminaux mobiles test ou éventuellement au moyen d'un réseau neuronal avec les modèles établis pour les terminaux mobiles test et des terminaux mobiles à regrouper (MS) sont affectés à un trajet.

7. Procédé selon la revendication 5 ou 6, **caractérisé en ce que** les terminaux mobiles à regrouper (MS) sont affectés à au moins un moyen de transport partiellement identifié, éventuellement un bus ou un train, de préférence dans lequel des horaires, éventuellement des données de voyages et/ou l'heure actuelle et/ou la date sont pris en compte.

8. Procédé selon la revendication 7, **caractérisé en ce que** des messages liés au moyen de transport concerné sont envoyés aux terminaux mobiles (MS) affectés à un moyen de transport, éventuellement groupés, messages qui peuvent être demandés ou rejetés par un programme prévu dans les terminaux mobiles (MS) ou par des instructions émises au réseau de communication mobile (PLMN).

9. Procédé selon l'une des revendications 1 à 8, **caractérisé en ce que** pour chaque trajet, les cellules séquentiellement traversées sont enregistrées et **en ce que** les données de regroupement déterminées par la station de base (BSS, BSC, BTS) sont remises à la station de base (BSS, BSC, BTS) qui gère au moins la cellule suivante qui est atteinte par un groupe correspondant de terminaux mobiles (MS_{A1}, MS_{A2}, ...) de sorte que les mesures nécessaires peuvent être prises pour préparer la cellule suivante au transfert intercellulaire imminent.

10. Procédé selon la revendication 9, **caractérisé en ce que** une prise en charge des terminaux mobiles (MSA1, MSA2, ...) par l'unité de commande dynamique (BSS_{D}, BSC_{D}) ainsi qu'une identification de la zone de séjour dynamique (LA_{D}) sont annoncées et confirmées aux terminaux mobiles (MSA1, MSA2, ...) par un canal de contrôle, tel que le canal de contrôle diffusé (Broadcast Control Channel) BCCH ou un canal de contrôle dédié (Dedicated Control Channel) DCCH, SDCCH, SACCH de sorte qu'une actualisation de la zone de séjour (LA) ne devient nécessaire que si l'identification obtenue de la zone de séjour (LA) ne correspond plus à l'identification de la zone de séjour dynamique (LA_{D}), obtenue ultérieurement par le canal de commande.

11. Procédé selon l'une des revendications 1 à 9, **caractérisé en ce que** les données de regroupement déterminées par la station de base (BSS, BSC, BTS) sont analysées, pour estimer ou calculer à l'avance la situation momentanée ou future du trafic sur le trajet concerné (VW1) et/ou pour pouvoir calculer et préparer des ressources nécessaires futures, en particulier de trafic, telles que des moyens de transport ou de ravitaillement.

12. Réseau de téléphonie mobile (PLMN) approprié pour la mise en oeuvre du procédé selon l'une des revendications 1 à 12, au moins une station de base (BSS, BSC, BTS) étant prévue, laquelle dispose de moyens de sorte qu'elle
a) peut saisir les données de mobilité associées aux terminaux mobiles (MS) ;
b) peut affecter des terminaux mobiles (MS) à l'aide des données de terminaux mobiles à un trajet et/ou un moyen de transport et déterminer de préférence la direction de déplacement des terminaux mobiles (MS) ; et
c) peut attribuer les terminaux mobiles (MS) correspondants entre eux et associés à un trajet et/ou à un moyen de transport sont au moins à un groupe (A) et peut former des données de regroupement correspondantes, qui
peuvent être amenées soit à une station de base dynamique (BSSD, BSCD, BTSD) pour laquelle il est possible de réserver des ressources radio dans les stations de base (BSS, BSC, BTS) disposées le long du trajet et station qui peut être guidée parallèlement avec les terminaux mobiles regroupés (MS_{A1}, MS_{A2}, ...) dans le fait que les ressources nécessaires du réseau de téléphonie mobile (PLMN) peuvent être occupées et relibérées séquentiellement le long du trajet ; ou peuvent être amenées à une unité de commande dynamique (BSS_{D}, BSC_{D}) qui est affectée à une zone dynamique de séjour (LA_{D}) qui peut être guidé avec les terminaux mobiles regroupés (MS_{A1}, MS_{A2}, ...) de sorte que des modifications de la zone de séjour ne sont pas nécessaires en cours de route le long du trajet.

13. Réseau de téléphonie mobile (PLMN) selon la revendication 12, **caractérisé en ce que** la station de base (BSS, BSC, BTS) présente au moins un processeur, une mémoire de données et une mémoire de programme ainsi qu'un programme embarqué (PRG) qui est approprié pour l'analyse de messages et de données qui sont émis par les terminaux mobiles (MS) pendant des procédures d'actualisation de localisation et de transfert intercellulaire et pour le regroupement correspondant des terminaux mobiles (MS).

14. Réseau de téléphonie mobile (PLMN) selon la revendication 12, **caractérisé en ce que** des données de mobilité des terminaux mobiles ou éventuellement des modèles de terminaux mobiles test, formés au moyen de réseaux neuronaux, sont déposés dans la mémoire de données, données qui sont comparables aux données actuelles saisies de mobilité des terminaux mobiles pour pouvoir affecter et regrouper les terminaux mobiles (MS) à un trajet ou un moyen de transport.

15. Réseau de téléphonie mobile (PLMN) selon l'une des revendications 12 à 14, **caractérisé en ce qu'**au moyen du programme (PGR), il est possible d'enregistrer pour chaque trajet (VW) les cellules parcourues séquentiellement par les terminaux mobiles (MS) et **en ce que** les données de regroupement fournies par la station de base (BSS, BSC, BTS) peuvent être transmises à la station de base (BSS, BSC, BTS) qui gère au moins la cellule suivante qui est atteinte par un groupe respectif de terminaux mobiles (MS_{A1}, MS_{A2}, ...) et **en ce que** les mesures nécessaires peuvent être mises en oeuvre pour préparer cette cellule suivante au transfert intercellulaire imminent éventuellement par répartition de charge.

16. Réseau de téléphonie mobile (PLMN) selon l'une des revendications 13 à 15, **caractérisé en ce que** la position du groupe respectif de terminaux mobiles (MS_{A1}, Musa2, ...) est déterminable.

17. Procédé de réseau de téléphonie mobile (PLMN) selon la revendication 16, **caractérisé en ce que** chaque station de base stationnaire (BSS, BSC, BTS) et/ou la station de base dynamique (BSS_{D}, BSC_{D}, BTS_{D}) présente au moins les fonctions d'une station d'émission et de réception (BTS), éventuellement en supplément la fonction d'une unité de commande respective (BSC) qui est gérée par une unité de commande maîtresse.

18. Réseau de téléphonie mobile (PLMN) selon l'une des revendications 12 à 17, **caractérisé en ce que** les cellules disposées le long du trajet sont affectées de telle manière à des zones de séjour (LA1; LA2; ...) du réseau de téléphonie mobile, qu'aux extrémités des trajets, sont disposées respectivement au moins deux cellules adjacentes qui sont affectées à différentes zones de séjour (LA1; LA2; ...) du réseau de téléphonie mobile (PLMN).

19. Terminal mobile (MS) avec un programme d'exploitation qui est approprié pour la mise en oeuvre du procédé selon l'une des revendications 1 à 11, en particulier pour l'échange de données avec une station de base dynamique (BTS_{D}) et/ou une unité de commande dynamique (BSC_{D}).
